# EUROPEAN PATENT APPLICATION

(11) **EP 1 923 164 A2**
(43) Date of publication of application: **21.05.2008**
(21) Application number: 07120593.4
(22) Date of filing: 13.11.2007
(51) Int. Cl.: B23K 11/06, B23K 37/04, B23K 37/02

(54) **Apparatus for welding strips of multi-layered material to design**

(30) Priority: 14.11.2006 IT RN20070072
(71) Applicant: S.M.R.E. Engineering di Mazzini S & C. S.n.c., 06014 Perugia (IT)
(72) Inventor: Mazzini, Samuele, 06014 Perugia (IT)
(74) Representative: Provvisionato, Paolo

(57) **Abstract**

An apparatus (1) for welding at least one strip (32) in multi-layered material, comprised of the following: a work table (2) on which the strip (32) is suitably laid out; an operator part (4) including a welding means (3) complete with a motor-driven wheel (5) which is moved over the strip (32) and the wheel circumference (6) is moved over it; an operating head (7) supporting the welding means (3) with the wheel (5) pressed onto the strip (32) against the opposing reaction of the table (2); and an automatic management and control system (8) to operate the apparatus (1). The operating head (7) is moved over the table (2), along at least two translation directions (9 and 10) via the control and management of this system (8) to allow the welding means (3) to make seams following the lines of a programmed design.

## Description

This invention refers to the area of machinery and equipment for weld multi-layered materials. In particular, it is for use with soft materials such as strips in fabric and/or different materials but with similar structure or in any case, with equivalent characteristics.

More specifically, the invention concerns an appliance for welding a single strip of multi-layered material folded on itself and/or for making assembly welds on one or more overlapped strips.

In the aforementioned technical sector, it is usual to weld strips of multi-layered material using spot welds or intermittent seams.

One popular welding technique involves the use of welding equipment where hot air or electric heating elements are the heat sources used.

Another technique uses molecular agitation as a heat source; it is induced in the material by ultrasound, applied to the material itself and generated by a sonotrode. In this case, there is wide-scale use of rotating or roller sonotrodes, which are manually manoeuvred by an operator, or automatically moved to the required welding points types or along the intermittent lines of the necessary seam.

On these automatic apparatus, a relative motion is generated between the strip of material to be welded and the welding head; this allows each to be positioned according to the other, which is necessary when executing the various joints.

At the current time, whatever welding technology is used, seam welding is exclusively performed for straight lines and in the majority of cases, for sections covering relatively short lengths.

This involves at least two types of problem.

The first, which can be traced back to the fact that every time, the operator needs to establish the movements required to give continuity to long seams and/or in any case, he/she needs to establish an operating strategy for the movements he/she considers best for the performance of his/her task. The obvious result is that the operator's discretion and his/her skill and experience are fundamental for the quality and cost-effectiveness of the job itself.

A second problem - one that is linked to the fact that joints can only be welded along straight lines and for relatively short sections - can be found in the need to make many relative movements between the head and the strips in order to complete even a quite simple welding programme. This not only works to the detriment of operating times and job quality, it can also mean that with lengthier work times, these operations may result in operator fatigue.

To clarify this latter aspect, it is important to refer to an example, such as for the creation of a simple canvas to cover a lorry.

In fact, although this type of product is rectangular in shape and therefore, simple, different welding processes are required for braces, belts, and edging, etc. With the technology currently in use these processes involve difficult and strenuous handling of the main canvas, which weighs several dozen kilos and its manoeuvring around the traditional machines that weld material only after it has been correctly positioned and in the majority of cases, make seams of a length of 70-100 cm at a time, meaning it is obligatory to move the canvas and repeat operations several times, tiring the operator.

The purpose of this invention is therefore to overcome the aforementioned problems. This aim is achieved by an apparatus to weld together one or more strips of multi-layered material and created according to claim 1 and/or according to claims depending directly or indirectly on the aforementioned claim 1.

The advantages of this invention are also highlighted further by the detailed description which follows and referring to the annexed drawings, which serve purely as an example and in no way limit said invention, where:
- Figure 1 shows a general perspective view of the apparatus, as per the invention, seen from the operator's viewpoint on the control side;
- Figure 2 shows a general perspective view of the apparatus illustrated in Figure 1, seen from the opposite side to the control station;
- Figure 3 shows a view of a detail from Figure 2, shown on a larger scale and seen from a different view compared to the one in the aforementioned Figure 2;
- Figure 4 shows an enlarged view of a detail from Figure 3, as seen from the side;
- Figure 5 shows an enlarged view of a detail from Figure 3, as seen from the front and side, and without any parts, which have been removed to emphasise others;
- Figure 6 shows a side view of the part in Figure 4 showing the side of said detail, opposite to the one shown in Figure 4;
- Figure 7 shows a front view of a part of the apparatus, seen from above, illustrating several important details of same;
- Figure 8 shows a view of a detail of an executive variation to the apparatus, according to the invention.

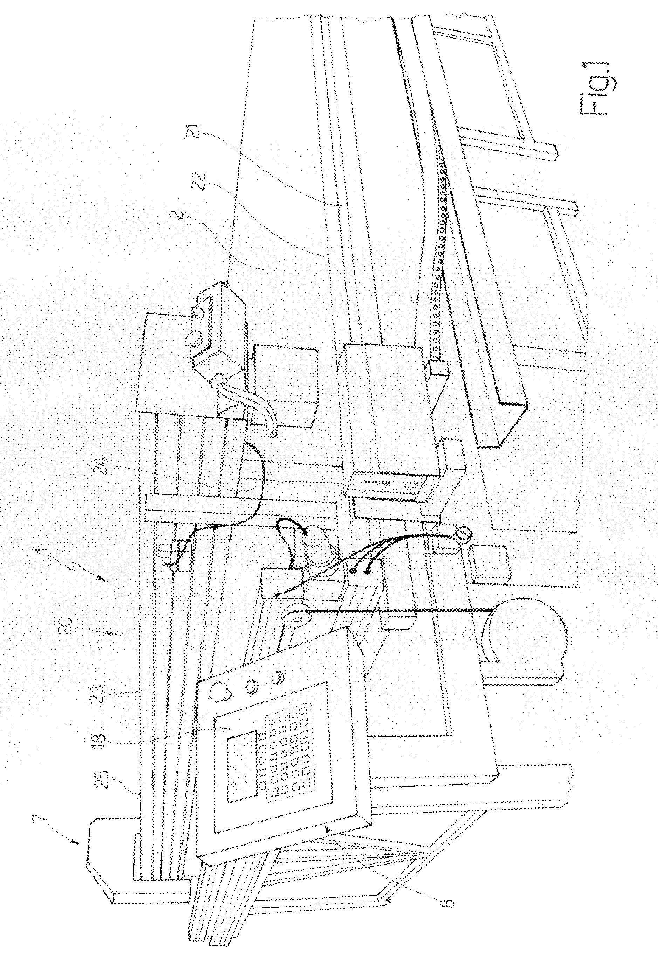

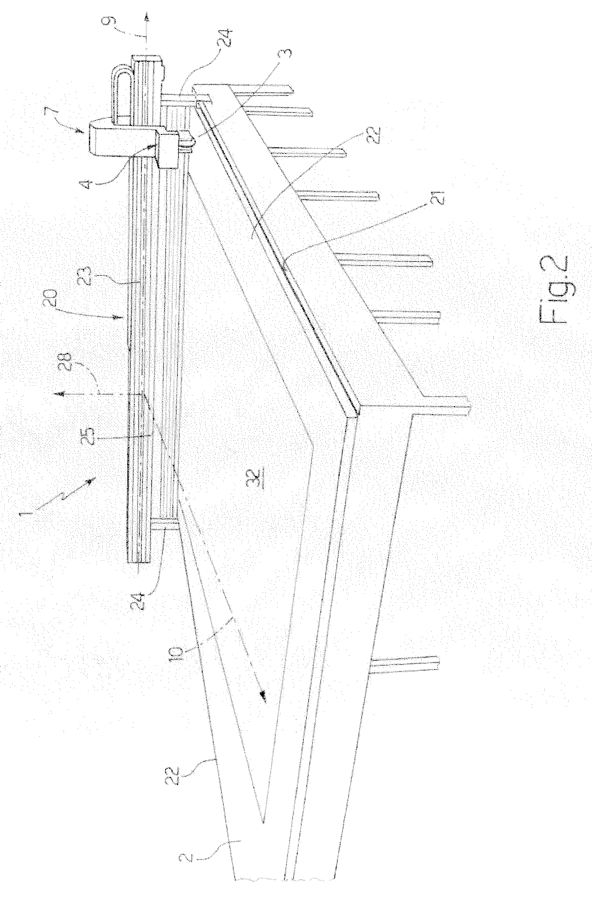

With reference to Figures 1 and 2 of the annexed drawings, 1 indicates, overall a piece of equipment for welding one or more strips 32 of multi-layered materials and in particular, of soft deformable materials such as fabrics or materials having the same structure and characteristics.

The apparatus 1 essentially includes: a horizontal work table 2; an operating part 4 comprised of a welding tool 3, supported on an operating head 7; and an automatic management and control system 8 for the operability of the apparatus 1 and relevant accessories.

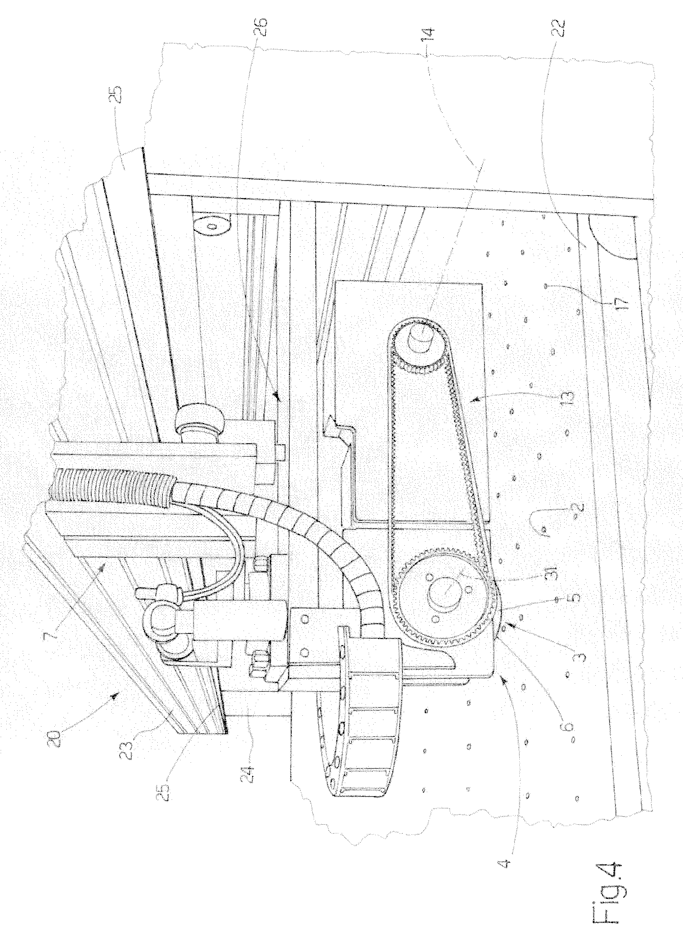

The work table 2 is made in a material chosen from those families of materials suited to ultrasonic resonance, such as, for example: crystal, stainless steel or granite. The aforementioned work table 2 also has micro perforations 17 - Figure 4 - through which pressurised air jets - not shown in the figure - have a suction effect on the strips 32 of fabric placed and spread over the table 2, causing them to adhere to its surface. For the reasons explained hereafter, this action is an additional function to the operation of apparatus 1 and therefore, the intensity of the anchorage force on the work table 2 is always suited to the purpose, even in the event that the material used to make up the strip 32 being machined is more or less air permeable.

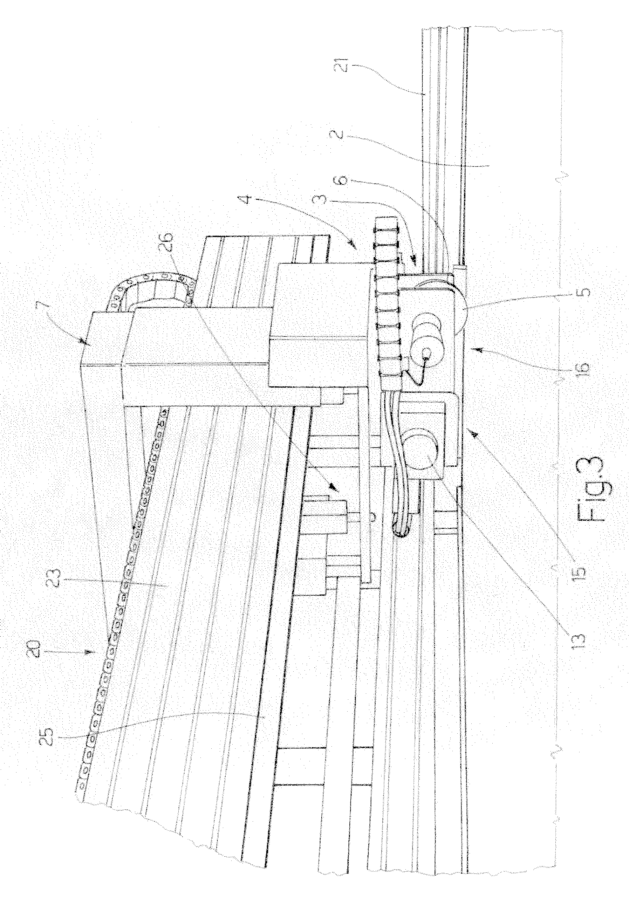

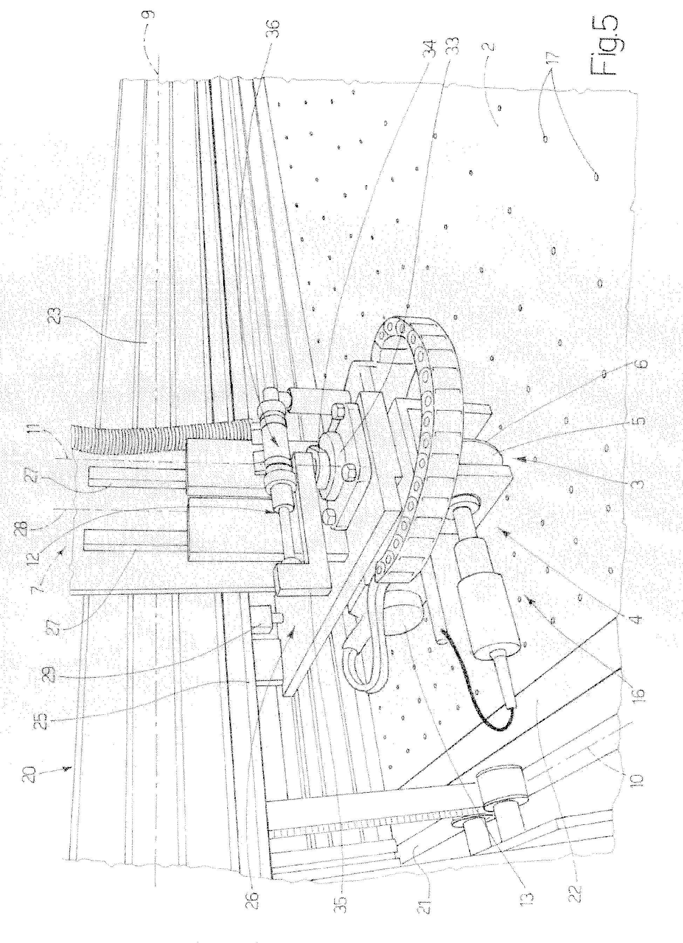

The operating part 3, which includes the welding means 3 - Figures 3 to 7 - has an incorporated heat source to supply the heat needed for welding. The heat source can use different technologies. It may be comprised, for example, of a hot-air heat source, heating elements or preferably, an ultrasound heat source.

This latter, which is a specific item in this invention, includes, in particular, a wheel 5 driven by a brushless motor, which is part of a sonotrode 16 for ultrasound welding of the aforenamed one or each strip 32. The wheel 5 is moved over the strip 32, with a support surface perpendicular to the work table 2 and its circumference 6 is moved over the strip 32 below.

If it is considered necessary, it is also possible to use an adhesive support which, once heated by the same source, integrated into the operating part 3, will increase the effectiveness of the weld on one or each of the aforementioned strips 32.

The operating head 7 supporting the welding means 3 is fitted to a bridge structure 20.

The bridge structure 20 includes a parallelepiped crosspiece 23, interposed horizontally and supported by a pair of vertical uprights 24. The vertical uprights 24 are placed along corresponding parallel guides 21, located on the two opposite sides 22 of the work table 2. The bridge structure 20 is motor driven and controlled by the management and control means 8 of the apparatus 1. It can be translated in a parallel and controlled manner along a translation direction 9, lengthways to the work table 2.

The crosspiece 23 also has lengthways guides 25, top and bottom, on which the operating head 7 is fitted with bilaterally. This latter, due to the effect of the carriages 30 associated to the guides 25 and to the effect of the relevant motor drives controlled by the management and control system 8 of the apparatus 1, is therefore able to slide in a controlled manner along the crosspiece 23 or in other words, along a second translation direction 10, crossways to the translation direction 9 of the bridge structure 20.

The operating head 7 also includes a vertically mobile system 26 that supports the operating part 4. This is fitted to vertical guides 27 so as to be moved by suitably controlled actuators, along a third direction 28 compared to the framework of the head 7, which is perpendicular to the work table 2.

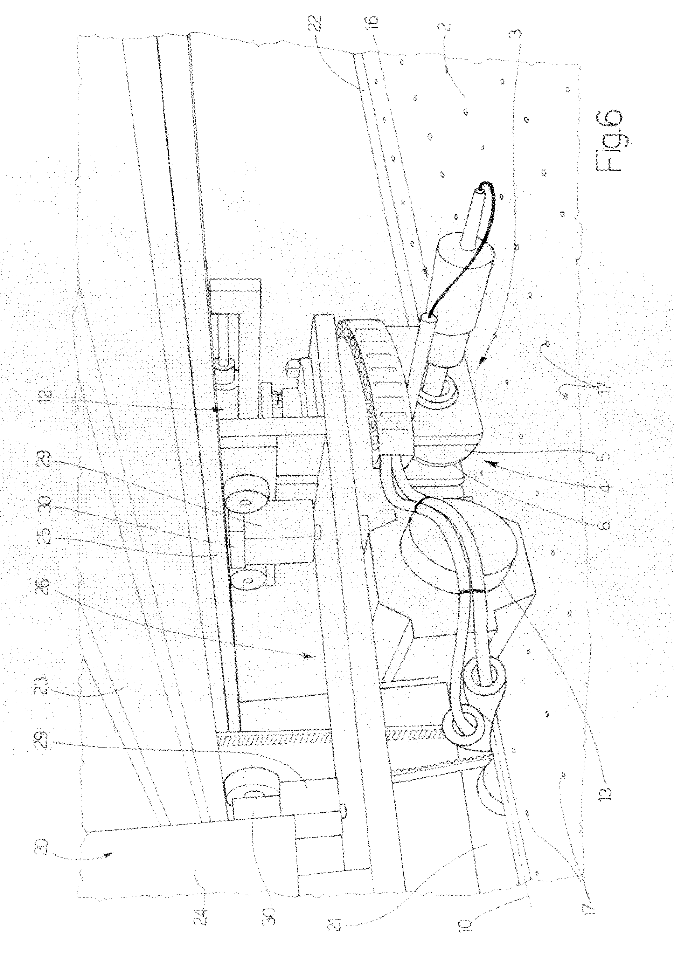

In this particular case, the actuators are comprised of a pair of pneumatic pistons 29 - clearly visible in Figure 6 - associated to the respective carriages 30 of the head 7, which allow the head 7 to move along the crosspiece 23.

The mobile system 26 can therefore approach or move away from the work table 2. More specifically, it can be positioned in such a way that when using the apparatus 1, the wheel 5 can be sufficiently pressed down onto the strip 32 of material to be welded, thereby exerting suitable compression on same and opposing the reaction offered by the work table 2.

In the light of the above, the operating head 7 is perfectly mobile, as controlled and managed by the aforementioned system 8, above the work table 2, along the two translation directions 9 and 10, parallel to the work table 2, and in a third direction 28 to adjust the operating parts 4, which is perpendicular to the previous ones. Coordinated control and management of translations parallel to the work table 2 therefore allow the welding means 3 to create seams following a programmed design stored in the control and management system or in any case, received by said system from remote means that are able to interact suitably with the management and control system 8.

According to requirements, the management and control system 8 allows the contemporary movement of the operating head 7 along the two translation directions 9 and 10, and independent and consecutive movement of same in the translation directions 9 and 10. Coordinated movement is useful, for example, to follow curved welding lines; independent movement can be used for welding designs where the joints suddenly change direction or need to intersect with one another to form vertices.

To perform these movements, the operating head 7 is specifically equipped with a further degree of freedom which can be seen as the possibility to rotate the operating part 4, or in other words, the wheel 5, around a vertical axis 11. This axis 11 is local for the head 7, so as to position the support surface of the wheel 5 so that it is placed at a tangent to a curved welding seam to be made on a strip 32.

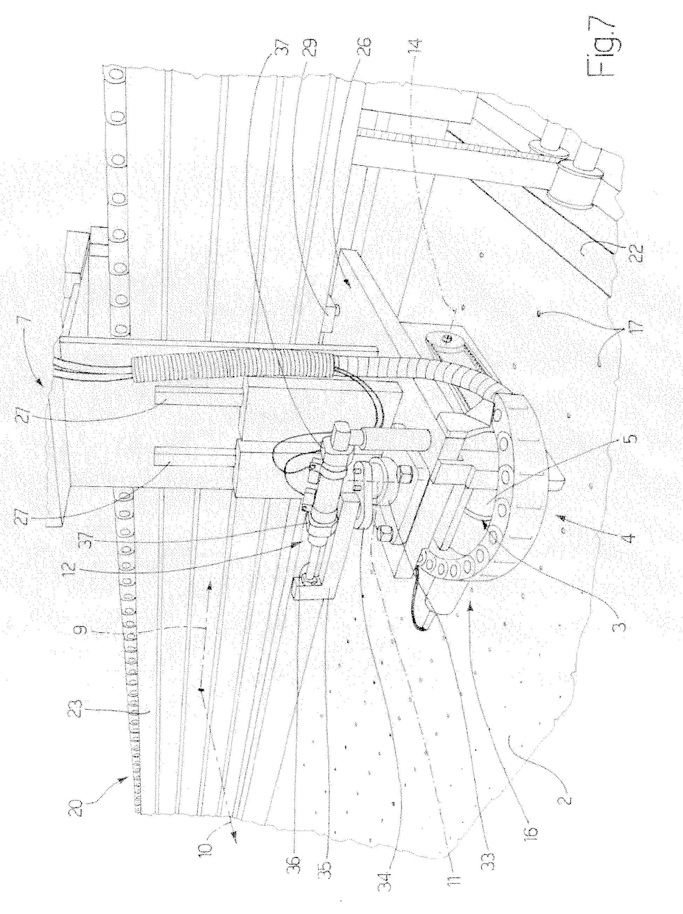

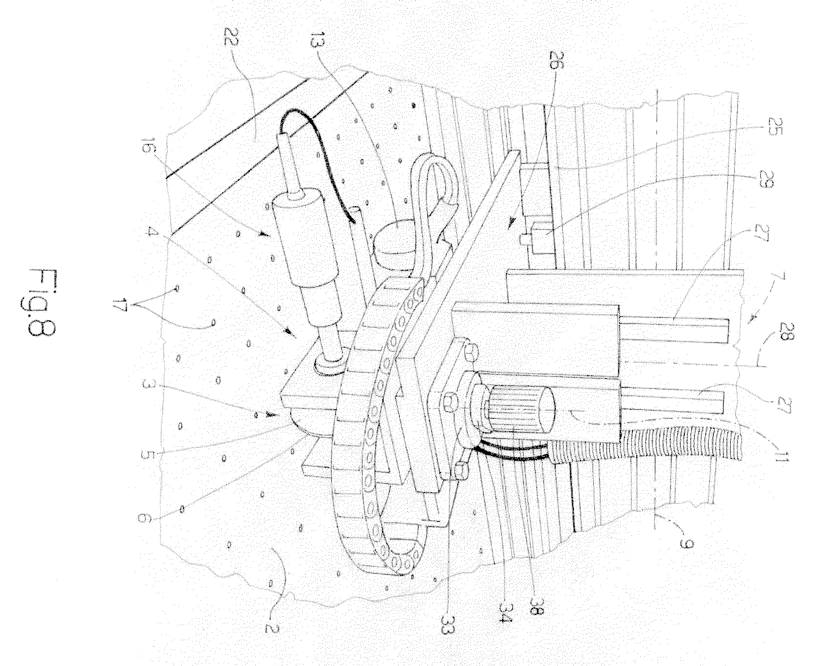

This rotation too is controlled and managed by the management and control system 8, which pilots the relevant drives 12. These drives 12, which can be seen clearly in Figure 7, include a support 33 for the wheel 5, which rotates around the vertical axis 11 when a crank 34 is enabled. The rotation of the crank 34 is controlled through an arm 35 from a pneumatic piston 36. The piston 36 is supported by fixed brackets 37 on the equipment 26 of the head 7 and it is driven from the management and control system 8. There are advantages to using the piston 36 in terms of rotating the wheel 5 from 0° to 90°, as needed to make a seam where two straight-line sections come together in a shared vertex. If the wheel 5 is to be placed according to a series of tangents successively enveloping a curved line along which to make a seam, the drives 12 can be created simply - as shown in Figure 8 - or in other words, directly splining a motor 38 that is piloted and controlled by the management and control system of the apparatus 1 onto the support 33 of the wheel 5.

As already mentioned, the wheel 5 is motor driven so as to rotate on its own axis 31 with its own rotation, controlled and properly coordinated with the translation movements of the operating head 7 along the first 9 and second 10 translation directions.

The motor drive of this wheel 5 is such that the wheel 5 is moved as it rests on the strip 32 at a peripheral speed with, compared to the movement speed of the operating head 7, a backward direction and substantially equal intensity. This means that compared to the strip 32, the wheel 5 has what is essentially a rolling motion to prevent the strip 32 from being dragged and make sure there is no curling, guaranteeing defect-free seams that are constant over the entire required length.

To achieve this motor drive for the wheel 5, the apparatus 1 includes motor drive means 13 for the wheel 5, which are placed on an electric axis 14 with the actuators 15 for bridge structure 20 and operating head 7 translation along the cross piece 23. This way, the resulting movements of the operating head 7 along the first and second translation directions - parallel to the work table 2 - are kinematically coordinated with the rotating movement of the wheel 5, or in other words, the translation speed of the head 7 and the peripheral speed of the wheel 5 are closely coordinated and in step with one another.

The best means for the motor drive of the wheel 5 includes at least one controlled brushless motor, placed on an electric axis 14 with the movements of the operating head 7 for the directions 9 and 10, parallel to the work table 2.

The apparatus 1 described here above can be used to achieve straight or curved welding seams and even mixed seams as well as, of course, continuous seams or seams made in intermittent sections with set gaps between them.

The design of the required welding seams can be programmed beforehand, using a computerised control module 18, which can be put into operation using a suitable software support and/or dedicated hardware, if required.

One of such control modules 18 is able to perform functions concerning the typical operations of computer-aided design, through which it is possible to program the routes for the joint seams to be made.

The control module 18 may also include a specific function concerning the electrical synchronism feedback control, taking into account the actual sinking of the wheel 5 into the material of the strip 32.

This control makes it is possible to calculate and correct the actual synchronism between the rotation movement of the wheel 5 and the movements of the operating head 7 so as to achieve a purely rotating motion for the wheel 5 over the strip 32. This eliminates all drag between the wheel 5 and the strip 32 in any working conditions.

This type of control is in fact based on the calculation of the actual operational primitive circumference 6 of the wheel 5. Not only does it take into account the geometric primitive circumference of the wheel 5, it also considers the thickness of the strip 32 being machined each time and the sinking of the wheel 5 into the material forming the strip 32 itself, under the effect of material relaxing due to softening or local melting caused by the ultrasonic welding process.

The correction of movement synchronism between the rotation speed of the wheel 5 and the translation speed of the head is therefore extremely accurate and realistic. On one hand, it allows high-quality weld execution and on the other, easy and immediate programming, via software, of the most suitable synchronism characteristics for the types of material forming the strip 32 and for the different potential thickness presented each time.

Therefore, it is clear that the first of the characteristics named here above shows that it is not strictly necessary for the strip 32 to be adherent to the work table 2, since this is an additional characteristic for the purposes of being certain to achieve maximum machining quality. As for the second characteristic mentioned here above, it is evident that it gives the apparatus 1, as per the invention presented here, a great deal of operating flexibility since it is possible to use it on very different materials without the operator having to change the physical device configuration on the machine itself.

As stated above, the apparatus 1 is not just able to make welds from designs - something which is not currently possible with the machines and equipment available today - but it also offers a high degree of operating flexibility since it can be set up to work with different types of material choosing only optimum working conditions from a menu on a suitable control panel.

As well as the above-mentioned advantages, the apparatus 1, as per the invention, also offers the further advantage of being able to use several tools, making it possible to perform varied processes with minimum down times between one process and the next.

In fact, the operating head 7 described above, although mainly designed to support a suitable operating part 4 for making welds from designs, can also be equipped as a supporting element for several tools, each with its own different function, while executing the same design.

To this end, the operating head 7 may also include a cutting tool for cutting the strip 32 according to the lines of the programmed design and/or a plotter to mark out outlines corresponding to the programmed lines and required to perform subsequent operations on the strip 32.

The invention, as conceived, is evidently open to industrial use. It is also possible to make numerous changes and variations, all within the sphere of the concept behind its invention. All details can be replaced by technically equivalent elements.

## Claims

1. An apparatus for welding at least one strip (32) of deformable, multi-layered materials and, in particular, pieces of fabric, comprised of:
a work table (2) on which said one or each strip (32) is suitably laid out; an operating part (4) including a welding means (3) complete with motor-driven wheel (5), the outer edge (6) of which is moved over the strip (32); an operating head (7) to support the welding means (3) which, when used, is placed with the wheel (5) pressed on the strip (32) against the opposite reaction exerted by the table (2); a management and control system (8) for the automatic operation of the apparatus (1), the apparatus is **characterised by** the fact that the management and control system (8) moves the operating head (7) over the table (2) and along at least two translation directions (9,10) so as to allow the welding means (3) to make the seams following the lines of a programmed drawing.

2. The apparatus of claim 1, **characterised by** the fact that the operating head (7) is moved along these two translation directions (9 and 10) with indifferently contemporaneous or consecutive movements.

3. The apparatus of claim 2, **characterised by** the fact that the operating part (4) rotates compared to the head (7), around an axis (11) that is perpendicular to those directions (9 and 10), at the command of the management and control system (8).

4. The apparatus of claim 3, **characterised by** the fact that it includes pneumatically driven means (12) to rotate said operating part (4) around the axis (11).

5. The apparatus of claims 1 or 2 or 3, **characterised by** the fact that said motor-driven wheel (5), in use, is rotated around its own axis (31) with its own controlled rotation, properly coordinated, at least with the movements of the aforementioned operating head (7).

6. The apparatus of claim 5, **characterised by** the fact that said motor-driven wheel (5) is moved while resting on the strip (32), at a peripheral speed with, compared to the movement speed of the operating head 7, a same direction and substantially equal intensity so that, compared to the strip (32), it essentially has a rolling motion only.

7. The apparatus of claim 5 or 6, **characterised by** the fact of including motor drive means (13) for the wheel (5) placed on an electrical axis (14) with the actuators (15) of the two-directional translation of the operating head (7).

8. The apparatus of claim 7, **characterised by** the fact that the motor drive means (13) of the wheel (5) include at least one controlled brushless motor, placed on an electrical axis (14) with the motor drive means (13 and 15) of the head (5).

9. The apparatus of the above claims, **characterised by** the fact that the welding seams can be straight, curved and/or mixed indifferently.

10. The apparatus of claim 9, **characterised by** the fact that said welding seams are continuous.

11. The apparatus of claim 9, **characterised by** the fact that said welding seams are made in continuous sections, conveniently spaced between one another.

12. The apparatus of the above claims, **characterised by** the fact that the wheel (5) is part of a sonotrode (16) for ultrasonic welding of one or each of the aforementioned strips (32).

13. The apparatus of claim 12, **characterised by** the fact that the aforementioned work table (2) is made from a material chosen from the families of materials that are suitable for ultrasonic resonance.

14. The apparatus of one of the claims 1 to 12, **characterised by** the fact that the welding means (3) includes an operating organ (4), which is equipped with a heating source using hot air.

15. The apparatus of one of the claims 1 to 12, **characterised by** the fact that the welding means (3) includes an operating part (4), which is equipped with a heating source using electric heating elements.

16. The apparatus of claim 1, **characterised by** the fact that the work table (2) is equipped with micro perforations (17) and that said equipment includes pressurised air means to exert a suction action to adhere the strip (32) to the work table (2) on at least one strip (32) through the micro perforations (17).

17. The apparatus of one of the claims 1 to 9, **characterised by** the fact that said management and control system (8) includes a control module (18) to calculate the actual operational primitive circumference (6) of the aforementioned wheel (5), and to identify any corresponding correction to be made to the kinematic correlation between the rotation speed of the wheel (5) and the translation speed of the head (7).

18. The apparatus of claim 17, **characterised by** the fact that said control module (18) is implemented in a software means.

19. The apparatus of claim 17 or 18, **characterised by** the fact that said management and control module (18) can be programmed to suit the characteristics of the material forming the strip (32) being welded, on a case-by-case basis.

20. The apparatus of claim 1, **characterised by** the fact that said operating head (7) includes a cutting tool to cut the aforementioned strips (32) according to the lines in the set design.

21. The apparatus of claim 1 or 20, **characterised by** the fact that said operating head (7) includes a plotter to mark out the lines of the programmed design on the aforementioned strip (32).

22. The apparatus of the previous claims, as described and represented in the annexed drawings and for the purposes stated here above.
